# FASCICULE DE BREVET EUROPEEN

(11) **EP 3 106 933 B1**
(45) Date de publication et mention de la délivrance du brevet: **22.08.2018**
(21) Numéro de dépôt: 15172405.1
(22) Date de dépôt: 16.06.2015
(51) Int. Cl.: G04B 31/02, F16C 32/04

(54) **DISPOSITIF MAGNÉTIQUE DE PIVOTEMENT D'UN ARBRE DANS UN MOUVEMENT HORLOGER**
MAGNETISCHER SCHWENKEINRICHTUNG EINER WELLE IN EINEM UHRWERK
MAGNETIC PIVOTING DEVICE FOR AN ARBOUR IN A CLOCK MOVEMENT

(43) Date de publication de la demande: 21.12.2016
(73) Titulaire: MONTRES BREGUET S.A., 1344 L'Abbaye (CH)
(72) Inventeur: Maréchal, Sylvain, 39220 Bois-d'Amont (FR); Légeret, Benoît, 1347 Le Sentier (CH)
(74) Mandataire: Surmely, Gérard

(56) Documents cités:
- WO-A1-2012/062524
- FR-A- 1 098 890
- US-A- 4 340 038

## Description

### DOMAINE DE L'INVENTION

La présente invention concerne un dispositif de pivotement d'un arbre selon un axe déterminé dans un mouvement horloger, comprenant au moins un palier magnétique comportant un aimant qui exerce une force d'attraction sur un pivot en matériau magnétique de l'arbre, et un contre-pivot agencé entre l'aimant et le pivot. La présente invention concerne plus particulièrement un tel dispositif dans lequel le coefficient de frottement du contre-pivot avec le pivot est inférieur ou sensiblement égal à 0.1, et dans lequel le matériau dont est formé le contre-pivot a une dureté supérieure à 500 HV.

### ART ANTERIEUR

L'utilisation d'aimants permanents dans des organes rotatifs de mouvements horlogers est potentiellement avantageuse en particulier parce qu'elle permet de créer des forces importantes et localisées tout en limitant les frottements.

On connait déjà des dispositifs de pivotement magnétiques qui correspondent à la définition donnée en préambule. Le dispositif de pivotement d'un arbre dans une pièce d'horlogerie qui est représenté dans la figure 13 du document de brevet WO2012/062524 en est un exemple. La figure 1 annexée est une reproduction de cette illustration de l'art antérieur. Le dispositif de pivotement représenté est prévu pour un arbre 1 dont les extrémités forment deux pivots respectivement référencés 2 et 3. Les pivots sont réalisés en un matériau magnétique. La figure montre également un premier palier et un second palier agencés pour supporter et guider en rotation les deux pivots 2 et 3. Chacun des deux paliers comporte un chaton, respectivement référencés 40 et 44, un aimant permanent, respectivement référencés 4 et 6, monté dans le chaton, et une pierre de contre-pivot, respectivement référencées 18 et 19, insérée entre l'aimant et l'embouchure du chaton. Les aimants 4 et 6 des premier et deuxième paliers sont orientés de manière à attirer respectivement les premier et second pivots, de sorte que l'arbre 1 est maintenu dans l'axe de pivotement, avec un certain jeu, tant radialement qu'axialement.

La réalisation de mécanismes horlogers fiables fonctionnant selon les principes qui viennent d'être décrits ci-dessus représente un défi technique important à cause des dimensions extrêmement réduites et de la grande précision spatiale demandée pour accomplir avec précision des fonctions chronométriques.

En effet, la plupart des matériaux magnétiques naturels ou synthétiques sont inhomogènes à l'échelle d'un millimètre ou moins. La localisation et l'intensité des champs magnétiques à cette échelle est donc difficilement maitrisable. En particulier, les micro-aimants permanents qui présentent la plus haute densité d'énergie magnétique, par exemple les micro-aimants en SmCo ou NdFeB, sont typiquement fabriqués à partir de poudres d'éléments chimiques appartenant à la famille des Terres Rares, leur structure granulaire comportant des dimensions comprises entre 1 et 100 microns. L'homogénéité du champ magnétique diminue généralement en s'approchant de l'échelle des grains.

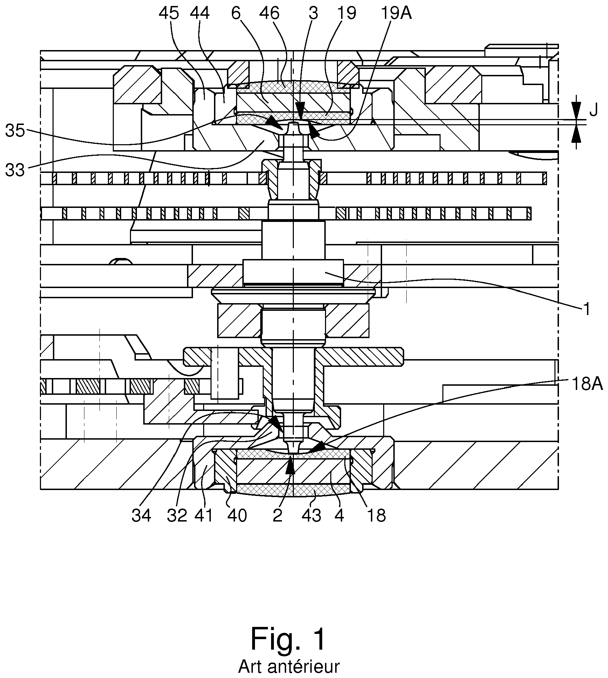

Un autre inconvénient des dispositifs de pivotement du type de celui de la figure 1 est lié à la présence de la pierre de contre-pivot (respectivement 18 et 19) entre l'aimant et le pivot. En effet la présence de la pierre de contre-pivot a pour effet d'augmenter la largeur d'entrefer entre l'aimant et le pivot. Or, on sait que l'intensité du champ magnétique décroit rapidement dès qu'on s'éloigne de la surface de l'aimant. Dans ces conditions, l'épaisseur de la pierre de contre-pivot est suffisante pour réduire considérablement l'intensité de la force de rappel exercée par l'aimant sur le pivot.

On connaît par ailleurs du brevet français N° 1.098.890 un palier magnétique pour un arbre comprenant deux pivots magnétiques en fer doux qui présentent chacun une forme de cône de manière à définir deux extrémités situées respectivement en regard de deux aimants formant deux paliers magnétiques. Ces paliers magnétiques se distinguent par la forme de leurs aimants qui sont usinés de manière à présenter chacun également une forme de cône, les deux sommets respectifs des deux cônes aimantés étant tournés vers les deux extrémités de l'arbre.

### BREF EXPOSE DE L'INVENTION

Un but de la présente invention est de remédier aux inconvénients de l'art antérieur qui viennent d'être mentionnés en fournissant un dispositif de pivotement dans lequel la répartition du champ magnétique au niveau de la surface d'appui est déterminée avec une plus grande précision, de sorte que le flux magnétique est largement concentré dans une petite région centrée sur l'axe de pivotement.

La présente invention atteint ce but en fournissant un mouvement horloger comprenant un arbre, ayant au moins un pivot en matériau magnétique et étant susceptible de pivoter selon un axe de pivotement déterminé et au moins un palier magnétique comportant un aimant, qui exerce une force d'attraction sur le pivot en matériau magnétique de l'arbre, et un contre-pivot agencé entre l'aimant et le pivot. Ensuite, le contre-pivot est formé d'un matériau ayant une dureté supérieure à 500 HV et un coefficient de frottement inférieur ou sensiblement égal à 0.1 avec le matériau dont est fait le pivot. Finalement, le contre-pivot est formé d'un matériau à haute perméabilité magnétique et présente, en section transversale à l'axe de pivotement, des dimensions inférieures à celles de l'aimant, ce contre-pivot étant agencé dans le mouvement horloger de manière à être centré sur l'axe de pivotement.

Précisons que par « matériau à haute perméabilité magnétique », on entend un matériau dont la perméabilité magnétique relative atteint un maximum qui est supérieur à 10, et dans lequel la valeur de saturation du champ magnétique est supérieure à 0.5 Tesla.

Conformément à l'invention, le contre-pivot est fait d'un matériau à haute perméabilité magnétique et il est agencé entre l'aimant et le pivot. Dans ces conditions, on comprendra que, d'un point de vue magnétique, le contre-pivot de l'invention joue le rôle de pièce polaire. De plus, comme en section transversale, les dimensions de la pièce polaire sont inférieures à celles de l'aimant, la pièce polaire agit comme un concentrateur du flux magnétique. Grâce à cette caractéristique, l'invention permet d'augmenter, d'une part, l'intensité du champ magnétique au niveau de la surface d'appui du contre-pivot, et d'autre part, le gradient radial du champ magnétique. Un premier avantage de l'invention est donc d'augmenter la force de rappel magnétique qui agit radialement sur le pivot.

Conformément à l'invention, le contre-pivot est agencé de manière à être centré sur l'axe de pivotement. De plus, comme le contre-pivot concentre le champ magnétique, la région où le champ magnétique est le plus intense est également centrée sur l'axe de pivotement. Et cela, indépendamment des tolérances de montage de l'aimant. Un avantage de cette caractéristique est de permettre de substituer au chassage de l'aimant un procédé moins précis mais également moins contraignant, comme un collage par exemple. On réduit ainsi les risques de détériorer le champ magnétique produit par l'aimant. On comprendra en outre qu'un deuxième avantage de la caractéristique susmentionnée est de centrer le pivot avec une meilleure précision indépendamment d'éventuels défauts magnétiques de l'aimant.

Conformément à l'invention, le même composant joue le rôle de contre-pivot et celui de concentrateur du flux magnétique, et en plus celui de structure magnétique de centrage de l'arbre magnétique, c'est-à-dire d'alignement de cet arbre sur l'axe de pivotement prévu. Un troisième avantage de l'invention est donc de concentrer le flux magnétique tout en centrant correctement le pivot sur l'axe de pivotement prévu, sans augmenter l'encombrement du dispositif de pivotement. On comprendra de plus qu'en réduisant le nombre de composants, l'invention permet de simplifier la construction et de réduire les coûts.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1 est une vue en coupe longitudinale d'un dispositif de pivotement magnétique de l'art antérieur ;
- la figure 2 est un schéma de principe d'un dispositif de pivotement selon un premier mode de réalisation de l'invention ;
- les figures 3 et 4 sont des vues partielles, respectivement en coupe longitudinale et en perspective, d'un dispositif de pivotement antichoc correspondant à une variante du premier mode de réalisation de l'invention ;
- la figure 5 est une vue partielle en coupe d'un mouvement de montre, qui illustre à titre d'exemple comment le dispositif de pivotement des figures 3 et 4 peut être intégré dans un mouvement horloger ;
- la figure 6A est une vue partielle en coupe longitudinale semblable à celle de la figure 3 mais illustrant un dispositif de pivotement correspondant à une première variante d'un deuxième mode de réalisation de l'invention ;
- la figure 6B est une vue en perspective d'un dispositif de pivotement selon une deuxième variante du deuxième mode de réalisation de l'invention ;
- la figure 7 est une vue schématique en perspective d'un dispositif de pivotement correspondant à un troisième mode de réalisation de l'invention ;
- les figures 8A et 8B sont des vues schématiques en plan de deux contre-pivots correspondant à des variantes du mode de réalisation de la figure 7 ;
- la figure 9 est une vue partielle en coupe longitudinale illustrant un palier d'un dispositif de pivotement correspondant à un quatrième mode de réalisation de l'invention.

### DESCRIPTION DETAILLEE DE MODES DE REALISATION

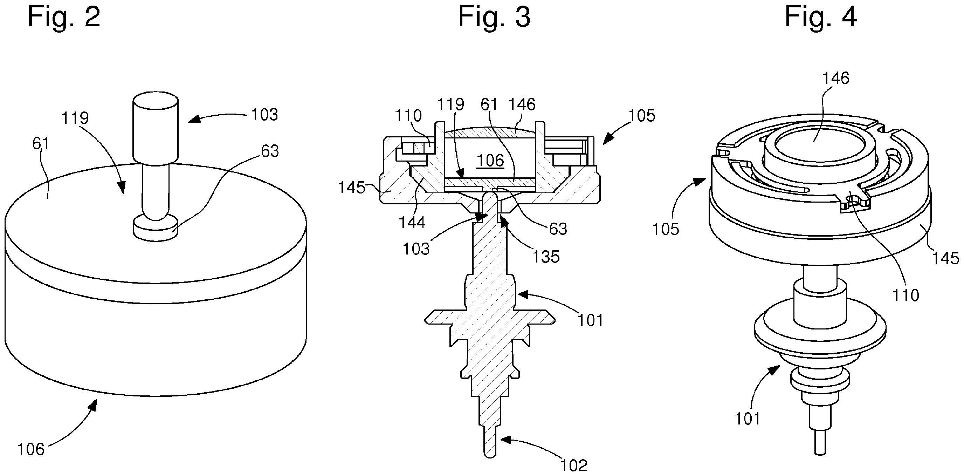

La figure 2 est un schéma de principe d'un dispositif de pivotement selon un premier mode de réalisation de l'invention. Conformément à l'invention, le contre-pivot (référencé 63) est un contre-pivot multifonction puisqu'il joue également un rôle de pièce polaire. En se référant à la figure 2, on peut voir un aimant permanent 106, une structure polaire 119 et un pivot 103. La structure polaire 119 est formée d'une partie centrale constituée par le contre-pivot 63 et d'une partie périphérique, notamment un châssis 61. Dans le présent exemple, le châssis 61 a la forme générale d'une planche au centre de laquelle est agencé le contre-pivot. Conformément à l'invention, le contre-pivot 63 est formé d'un matériau à haute perméabilité magnétique, et le châssis 61 qui l'entoure peut avantageusement être formé du même matériau que le contre-pivot lui-même. Dans ce cas, la planche qui, dans le premier mode de réalisation, constitue le châssis, a de préférence une épaisseur qui est considérablement plus fine que celle du contre-pivot lui-même. En effet, le fait que la planche soit de faible épaisseur permet d'éviter que celle-ci ne constitue un blindage rabattant les lignes de champ en direction de l'autre pôle de l'aimant. De préférence, le châssis 61 a la forme d'une planche mince qui entoure le contre-pivot et dont l'épaisseur est inférieure au dixième de l'épaisseur du contre-pivot.

Alternativement, il est également possible de réaliser le châssis en un matériau différent de celui dont est fait le contre-pivot. On peut choisir par exemple un matériau qui a une faible perméabilité magnétique, en particulier un matériau amagnétique ; c'est à dire un matériau ayant une perméabilité magnétique proche de la valeur 1. Dans ce second cas de figure, la planche, qui dans le présent mode de réalisation forme le châssis 61, peut avantageusement avoir approximativement la même épaisseur que le contre-pivot 63, ce dernier étant inséré dans un trou, de préférence traversant, situé au centre du châssis.

Dans le cadre du développement ayant conduit à l'invention, les inventeurs ont recherché des matériaux magnétiques ayant aussi de bonnes propriétés tribologiques pour le contre-pivot 63. Ils ont ainsi sélectionné des alliages combinant un métal dur avec un liant de Cobalt ou de Nickel. Selon une variante avantageuse, le métal dur en question est le carbure de Tungstène (WC). Selon une variante préférée, le matériau dont est fait le contre-pivot est un mélange de carbure de Tungstène et de Cobalt comprenant entre 20 et 25% de Cobalt. Alternativement, le matériau dont est fait le contre-pivot peut être un verre métallique magnétique. Avantageusement le verre métallique est un membre de la famille des verres métalliques à base de Fer (fer-cobalt-nickel). De préférence, on prendra un verre métallique de la forme (Fe,Co,Ni)-(AI,Ga)-(P,C,B,Si,Ge) ou de la forme (Fe,Co,Ni)-(Zr,Nb,Hf,Ta,Mo,W)-(P,C,B,Si). Une autre alternative avantageuse est de choisir un verre métallique à base de praséodyme-néodyme. Si le matériau dont est fait le contre-pivot est un tel verre métallique à base de praséodyme-néodyme, il s'agit de préférence d'un verre métallique de la forme (Nd,Pr)-(Fe,Ni,Cu)-AI.

En se référant à nouveau à la figure 2, on peut voir que dans l'exemple illustré, la structure polaire 119 est posée directement sur l'aimant 106. L'aimant et la structure polaire sont tous deux de forme cylindrique avec un diamètre identique. On comprendra toutefois que le diamètre de la structure polaire n'est pas forcément égal à celui de l'aimant. A titre d'exemple, le diamètre de l'aimant pourra avantageusement être compris entre 0.4 et 1.5mm, et son épaisseur pourra être comprise entre 0.2 et 2.0mm. Conformément à l'invention, les dimensions du contre-pivot 63, en section transversale à l'axe de pivotement, sont inférieures à celles de l'aimant. À titre d'exemple toujours, le diamètre du contre-pivot pourra avantageusement être compris entre 0.1 et 0.2mm, et son épaisseur entre 80 et 150µm. Finalement, le diamètre extérieur du châssis 61 pourra être compris par exemple entre 0.1 et 1.2mm. Si le châssis est réalisé dans le même matériau que le contre-pivot, son épaisseur sera de préférence comprise entre 40 et 100µm.

En se référant toujours à la figure 2, on peut voir de plus que le pivot 103 est en contact direct avec le contre-pivot 63 au centre de la structure polaire. En raison de ses propriétés magnétiques, le contre-pivot fait office de pastille polaire concentrant une part considérable du flux magnétique total. Ainsi, le pivot 103 subit une force magnétique qui l'attire en direction du centre de la structure polaire 119. De plus, comme on l'a vu et conformément à l'invention, le contre-pivot 63 est centré sur l'axe de pivotement prévu. Dans ces conditions, on comprendra que l'arbre 101 (figures 3, 4 et 5) est maintenu dans l'axe de pivotement, avec un certain jeu radial, par une structure magnétique de centrage formée par le contre-pivot.

En se référant maintenant plus particulièrement aux figures 3, 4 et 5, on va décrire plus en détail une variante de construction pour le premier mode de réalisation de l'invention. Ce mode de réalisation correspond à un dispositif de pivotement antichoc. Le dispositif de pivotement illustré comporte un arbre 101 dont les extrémités forment deux pivots respectivement référencés 102 et 103. Le pivot 103 est réalisé en un matériau magnétique. Les figures montrent également un premier palier 105 comprenant un aimant 106, agencé pour supporter et guider en rotation le pivot 103, et un second palier comprenant un aimant 104 similaire au premier palier. On décrira ci-après seulement le premier palier qui comporte un chaton 144, une pierre d'appui 146 calée au fond du chaton, un aimant permanent 106 monté dans le chaton contre la pierre d'appui, et une structure polaire 119 insérée entre l'aimant et l'embouchure du chaton. Dans l'exemple illustré, la pierre d'appui 146 n'a pas d'autres fonctions techniques que de fermer le fond du chaton et de servir de surface d'appui à l'aimant. La pierre d'appui remplit en outre une fonction décorative en servant de cache pour l'aimant. Les figures montrent encore un support 145, dont la base comporte une ouverture 135 pour le passage du pivot 103. Le support 145 est prévu pour positionner et pour maintenir élastiquement le chaton 144. À cet effet, le chaton prend appui dans un logement en forme de cône inversé du support 145 par des moyens élastiques qui, dans le présent exemple, sont constitués par un ressort 110. Dans l'exemple illustré, le support 145 est une pièce de révolution comprenant un rebord circulaire.

Conformément à l'invention, le contre-pivot 63 est agencé dans le mouvement horloger de manière à être centré sur l'axe de pivotement. On comprendra que selon le mode de réalisation qui fait l'objet du présent exemple, le contre-pivot est positionné par l'intermédiaire du châssis 61 qui est lui-même maintenu rigidement dans le chaton 144, le chaton servant donc de support pour le contre-pivot. Une possibilité pour assembler rigidement la structure polaire et le chaton est d'insérer à force le châssis dans le chaton.

En cas de choc axial subi par le mouvement horloger, le pivot 103 de l'axe de balancier 101 repousse la structure polaire 119 et le chaton 144 vers le haut. Dans ce cas, le ressort 110 agit seul pour ramener le chaton et l'axe de balancier dans leur position initiale. Le ressort 110 est dimensionné pour avoir une limite de déplacement de sorte qu'au-delà de cette limite, un épaulement de l'arbre 101 arrive en butée contre le pourtour de l'ouverture 135 de manière à permettre à une portion plus épaisse de l'arbre d'absorber le choc. En cas de choc latéral d'intensité modérée, c'est le champ magnétique, produit par l'aimant 106 et concentré par le contre-pivot 63, qui agit pour ramener le pivot dans sa position d'équilibre. On comprendra que la position d'équilibre du pivot correspond au maximum d'intensité du champ magnétique et que l'emplacement de ce maximum d'intensité coïncide avec le centre du contre-pivot 63. Si l'intensité du choc latéral dépasse une certaine limite, la force produite par le champ magnétique ne suffit pas pour retenir le pivot 103. Le pivot vient alors buter contre le pourtour de l'ouverture 135. Ensuite, une fois la course du pivot stoppée par le pourtour de l'ouverture, la force magnétique peut ramener le pivot vers sa position d'équilibre.

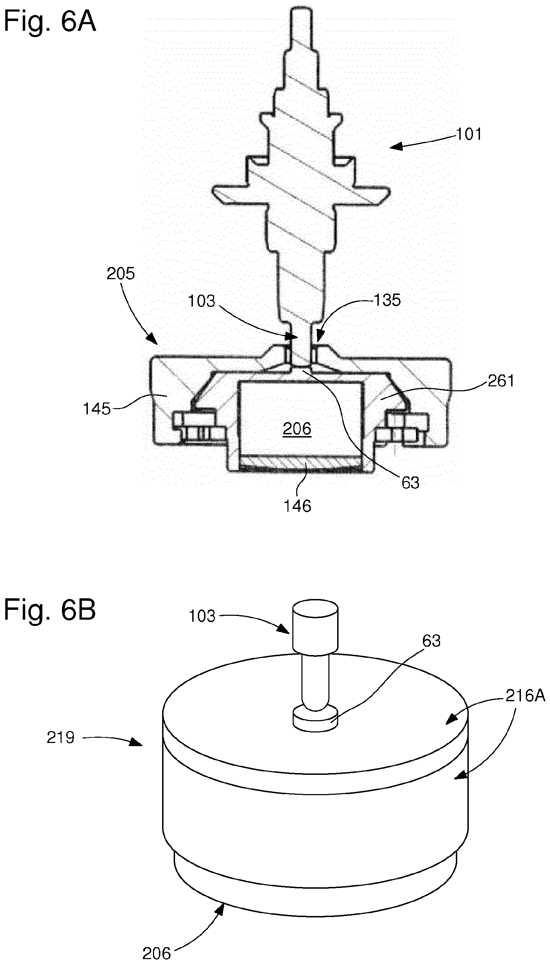

Les figures 6A et 6B correspondent à un deuxième mode particulier de réalisation de l'invention. La figure 6A est une vue partielle en coupe longitudinale de ce deuxième mode de réalisation du dispositif de pivotement de l'invention. La figure 6B est une vue en perspective schématique correspondant au deuxième mode de réalisation. En se référant tout d'abord à la figure 6B, on peut voir que la structure polaire 219 illustrée a la forme générale d'une douille creuse (qui s'ouvre vers le bas sur le dessin). Comme le montre la figure, un aimant permanent 206 est inséré depuis le bas dans la cavité formée dans la structure polaire 219. Au-dessus de l'aimant 206, le fond plat de la douille est semblable à la structure polaire 119 représentée dans la figure 2. Le contre-pivot 63 est agencé au centre du fond plat, dans l'axe de la douille. Le restant de la douille constitue le châssis 261A, qui comme dans l'exemple précédent peut être réalisé soit dans le même matériau que le contre-pivot, soit dans un matériau différent. Dans l'exemple illustré, la structure polaire possède une symétrie cylindrique. On comprendra toutefois que la douille pourrait alternativement avoir une section carrée, elliptique, polygonale, etc.

La figure 6A est très semblable à la figure 3. C'est la raison pour laquelle on a attribué les mêmes numéros de référence à ceux des éléments de la figure 6A qui sont pratiquement identiques à un élément de la figure 3 et ne seront pas décrits à nouveau ici. On notera toutefois que l'aimant 206 à un diamètre plus petit que le diamètre de l'aimant 106 de la figure 3, ce qui permet le chassage ou le collage de l'aimant 206 à l'intérieur du châssis en forme de douille de la structure polaire 219. Grâce à la cavité qu'elle comporte, la structure polaire 219 du dispositif de pivotement selon le mode de réalisation du présent exemple remplit simultanément la fonction d'une structure polaire qui comprend le contre-pivot 63 selon l'invention et d'un chaton agencé pour recevoir l'aimant 206. Un avantage de ce mode de réalisation est donc de simplifier la construction d'un palier antichoc.

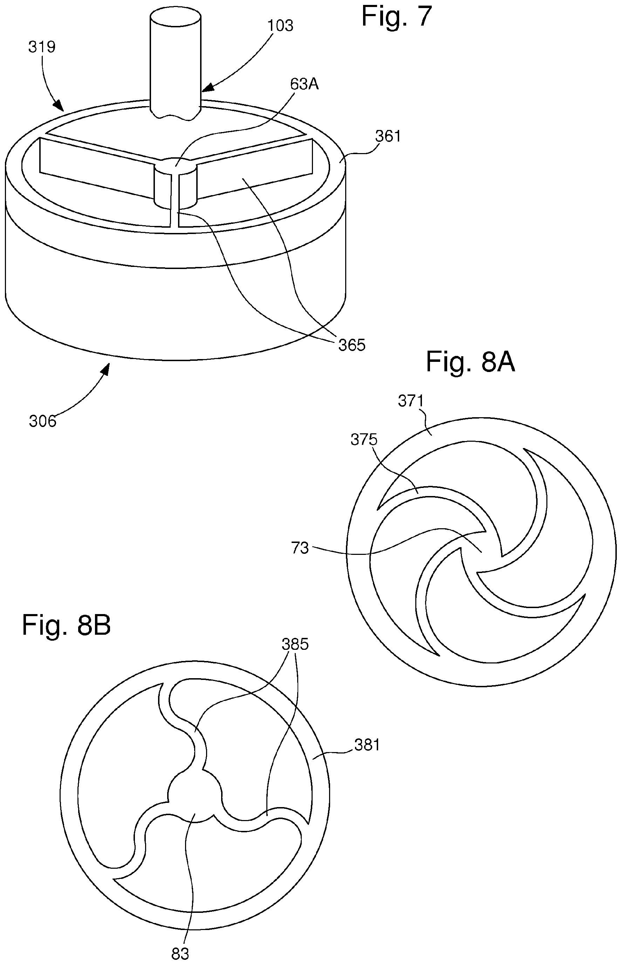

Les figures 7, 8A et 8B illustrent un troisième mode de réalisation exemplaire de l'invention. Comme on peut le voir sur les figures, conformément à ce mode de réalisation, la structure polaire comporte un espace annulaire qui sépare le châssis du contre-pivot formé, selon l'invention, d'un matériau magnétique ayant de bonnes propriétés tribologiques. Au moins trois bras relient le châssis au contre-pivot à travers cet espace annulaire. En se référant tout d'abord à la figure 7, on peut voir un aimant permanent 306, une structure polaire 319 et un pivot 103 (la partie terminale de ce pivot a été tronquée pour rendre plus visible la structure polaire 319). On peut voir que la structure polaire 319 est formée d'une partie centrale définissant le contre-pivot 63A, lequel est formé par un petit cylindre définissant une pastille centrale, et d'une partie périphérique ou châssis 361. Dans le présent mode de réalisation, le châssis 361 a la forme générale d'un anneau qui est relié au contre-pivot par au moins trois bras référencés 365.

On comprendra que le châssis 361 et les bras 365 peuvent être formés du même matériau que le contre-pivot lui-même. Dans ce cas, la présence d'un espace annulaire entre le contre-pivot et le châssis permet d'éviter que la structure polaire ne constitue un blindage rabattant les lignes de champ en direction de l'autre pôle de l'aimant. Ainsi, le troisième mode de réalisation permet d'avoir un châssis plus épais et donc plus solide, et cela même s'il est réalisé dans le même matériau que le contre-pivot. Alternativement, le châssis 361 et les bras 365 peuvent être réalisés en un matériau différent de celui dont est fait le contre-pivot.

En se référant maintenant plus particulièrement à la figure 8A, on peut voir que la structure polaire représentée comporte un châssis 371 et un contre-pivot 73 reliées l'une à l'autre par quatre éléments de liaison 375. Comme on peut le voir, les éléments de liaison représentés ont la forme de barrettes courbées en arc de cercle. On comprendra que, dans la variante représentée, la courbure des barrettes 375 a pour effet une liaison élastique entre la partie centrale et la partie périphérique. En effet, le châssis 371 est agencé autour du contre-pivot 73 de manière à le porter. Dans ces conditions, l'élasticité des bras permet au contre-pivot d'être maintenu élastiquement en place au centre du châssis. Ainsi, même si le châssis se déforme lorsqu'il est inséré dans un chaton par exemple, le contre-pivot conserve sensiblement sa position centrale relativement au châssis de la structure polaire et au chaton. On comprendra que les bras élastiques assurent ainsi un certain « auto-centrage » du contre-pivot.

En se référant maintenant à la figure 8B, on peut voir que la structure polaire représentée comporte un châssis 381 et un contre-pivot 83 reliés l'un à l'autre par trois éléments de liaison 385. Comme on peut le voir, les éléments de liaison représentés ont la forme de barrettes courbées en « S ». On comprendra que, dans la variante représentée, la courbure des barrettes 385 a pour effet, comme dans la variante précédente, d'augmenter l'élasticité de la liaison entre la partie centrale et la partie périphérique.

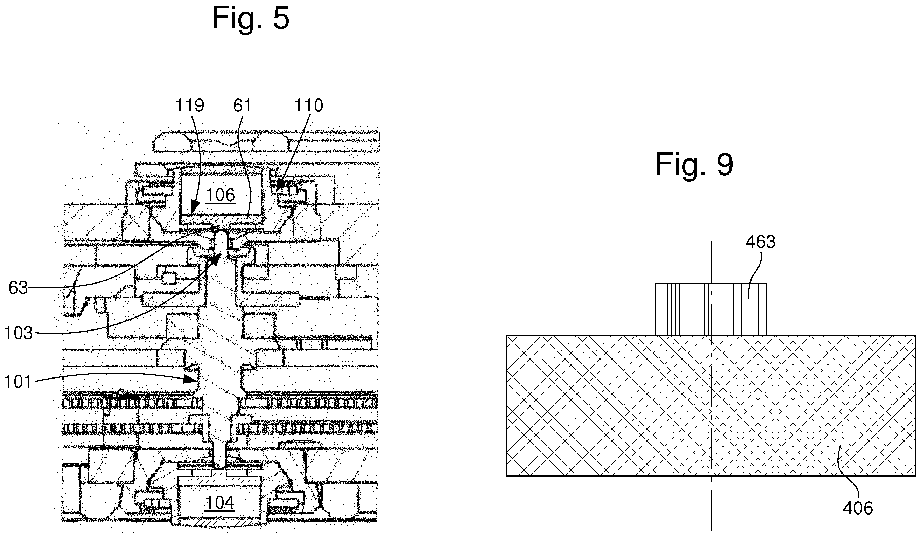

La figure 9 est une vue partielle en coupe longitudinale illustrant un palier d'un dispositif de pivotement correspondant à un quatrième mode de réalisation de l'invention. Une particularité de ce dernier mode de réalisation est que la structure polaire ne comporte pas de châssis périphérique mais se limite à un contre-pivot dont les dimensions, en section transversale à l'axe de pivotement, sont inférieures à celles de l'aimant. Sur la figure, on peut voir un aimant 406 et un contre-pivot 463 qui est collé directement sur l'aimant. Ce contre-pivot est constitué, selon l'invention, d'un matériau magnétique ayant de bonnes propriétés tribologiques.

## Revendications

1. Mouvement horloger comprenant un arbre (101), ayant au moins un pivot (103) en matériau magnétique et étant susceptible de pivoter selon un axe de pivotement déterminé et au moins un palier magnétique (105; 205) comportant un aimant (106; 206; 306; 406), qui exerce une force d'attraction sur le pivot (103) en matériau magnétique de l'arbre, et un contre-pivot (63; 63A; 73; 83; 463) agencé entre l'aimant et le pivot, le contre-pivot étant formé d'un matériau ayant une dureté supérieure à 500 HV et un coefficient de frottement inférieur ou sensiblement égal à 0.1 avec le matériau dont est fait le pivot ; **caractérisé en ce que** le contre-pivot est formé d'un matériau à haute perméabilité magnétique ; **en ce qu'**il présente, en section transversale à l'axe de pivotement, des dimensions inférieures à celles de l'aimant ; et **en ce que** le contre-pivot est agencé dans le mouvement horloger de manière à être centré sur l'axe de pivotement.

2. Mouvement horloger selon la revendication 1, **caractérisé en ce que** le palier magnétique (105; 205) comporte une structure polaire (119; 219; 319) qui comprend le contre-pivot (63; 73; 83) et un châssis (61; 261; 361) agencé autour du contre-pivot, le contre-pivot étant maintenu centré sur l'axe de pivotement par l'intermédiaire du châssis fixé à un support du mouvement horloger.

3. Mouvement horloger selon la revendication 2, **caractérisé en ce que** le châssis (61; 261; 361) et le contre-pivot (63; 73; 83) viennent de matière.

4. Mouvement horloger selon la revendication 3, **caractérisé en ce que** le châssis (61) a la forme d'une planche mince qui entoure le contre-pivot (63) et dont l'épaisseur est inférieure au dixième de l'épaisseur du contre-pivot, cette planche étant agencée contre une surface de l'aimant.

5. Mouvement horloger selon la revendication 2 ou 3, **caractérisé en ce que** la structure polaire (219) a la forme d'une douille avec ledit contre-pivot agencé à une face d'extrémité de cette douille, l'aimant (206) étant monté à l'intérieur de cette douille de manière que le contre-pivot soit en appui contre une surface de l'aimant.

6. Mouvement horloger selon la revendication 2 ou 3, **caractérisé en ce que** la structure polaire (319) comporte un espace annulaire qui sépare le châssis (361; 371; 381) du contre-pivot (63; 63A; 73; 83), et au moins trois bras (365; 375; 385) qui relient le châssis au contre-pivot à travers l'espace annulaire.

7. Mouvement horloger selon la revendication 6, **caractérisé en ce que** les bras qui relient le châssis au contre-pivot sont élastiques.

8. Mouvement horloger selon la revendication 2, **caractérisé en ce que** le châssis (61; 261; 361) est formé d'un matériau sensiblement amagnétique.

9. Mouvement horloger selon l'une quelconque des revendications précédentes, **caractérisé en ce que** le matériau à haute perméabilité magnétique du contre-pivot est constitué d'un mélange de métal dur et de Cobalt ou de Nickel.

10. Mouvement horloger selon la revendication 9, **caractérisé en ce que** ledit métal dur sélectionné est du carbure de Tungstène (WC) et ledit liant est du Cobalt, le pourcentage de Cobalt dans ledit mélange étant située sensiblement entre 20% et 25%.

11. Mouvement horloger selon l'une quelconque des revendications 1 à 8, **caractérisé en ce que** le matériau à haute perméabilité magnétique formant le contre-pivot est un verre métallique magnétique.

## Patentansprüche

1. Uhrwerk, umfassend eine Welle (101), die mindestens einen Drehzapfen (103) aus magnetischem Material aufweist, der um eine bestimmte Drehachse drehbar ist, und mindestens ein Magnetlager (105; 205), das einen Magneten (106; 206; 306; 406) aufweist, der auf den Drehzapfen (103) aus magnetischem Material der Welle eine anziehende Kraft ausübt, und einen Deckstein (63; 63A; 73; 83; 463), der zwischen dem Magneten und dem Drehzapfen angeordnet ist, wobei der Deckstein gebildet ist aus einem Material mit einer Härte von mehr als 500 HV und einem Reibungskoeffizienten mit dem Material, aus dem der Drehzapfen hergestellt ist, der kleiner oder im Wesentlichen gleich 0,1 ist; **dadurch gekennzeichnet, dass** der Deckstein aus einem Material mit hoher magnetischer Permeabilität gebildet ist; dass er im Querschnitt der Drehachse Abmessungen aufweist, die kleiner als jene des Magneten sind; und dass der Deckstein in dem Uhrwerk in einer Weise angeordnet ist, dass er auf die Drehachse zentriert ist.

2. Uhrwerk nach Anspruch 1, **dadurch gekennzeichnet, dass** das Magnetlager (105; 205) eine Polstruktur (119; 219; 319) aufweist, die den Deckstein (63; 73; 83) und einen um den Deckstein angeordneten Rahmen (61; 261; 361) enthält, wobei der Deckstein durch den Rahmen, der an einem Träger des Uhrwerks befestigt ist, zentriert auf die Drehachse gehalten wird.

3. Uhrwerk nach Anspruch 2, **dadurch gekennzeichnet, dass** der Rahmen (61; 261; 361) und der Deckstein (63; 73; 83) einteilig ausgebildet sind.

4. Uhrwerk nach Anspruch 3, **dadurch gekennzeichnet, dass** der Rahmen (61) die Form einer dünnen Platte hat, die den Deckstein (63) umgibt und deren Dicke kleiner als ein Zehntel der Dicke des Decksteins ist, wobei diese Platte an einer Oberfläche des Magneten angeordnet ist.

5. Uhrwerk nach Anspruch 2 oder 3, **dadurch gekennzeichnet, dass** die Polstruktur (219) die Form einer Hülse hat, wobei der Deckstein an einer Endfläche dieser Hülse angeordnet ist, wobei der Magnet (206) in dieser Hülse in einer Weise montiert ist, dass sich der Deckstein an einer Oberfläche des Magneten abstützt.

6. Uhrwerk nach Anspruch 2 oder 3, **dadurch gekennzeichnet, dass** die Polstruktur (319) einen Ringraum, der den Rahmen (361; 371; 381) von dem Deckstein (63; 63A; 73; 83) trennt, und mindestens drei Arme (365; 375; 385) aufweist, die den Rahmen mit dem Deckstein über den Ringraum verbinden.

7. Uhrwerk nach Anspruch 6, **dadurch gekennzeichnet, dass** die Arme, die den Rahmen mit den Deckstein verbinden, elastisch sind.

8. Uhrwerk nach Anspruch 2, **dadurch gekennzeichnet, dass** der Rahmen (61; 261; 361) aus einem im Wesentlichen nicht magnetischen Material gebildet ist.

9. Uhrwerk nach einem der vorhergehenden Ansprüche, **dadurch gekennzeichnet, dass** das Material mit hoher magnetischer Permeabilität des Decksteins aus einem Gemisch aus einem Hartmetall und aus Kobalt oder Nickel gebildet ist.

10. Uhrwerk nach Anspruch 9, **dadurch gekennzeichnet, dass** das gewählte Hartmetall aus Wolframcarbid (WC) gebildet ist und das Bindemittel Kobalt ist, wobei der Prozentsatz von Kobalt in dem Gemisch im Wesentlichen im Bereich von 20 % bis 25 % liegt.

11. Uhrwerk nach einem der Ansprüche 1 bis 8, **dadurch gekennzeichnet, dass** das Material mit hoher magnetischer Permeabilität, das den Deckstein bildet, ein magnetisches Metallglas ist.

## Claims

1. Timekeeping movement including an arbor (101), which has at least a pivot (103) made of magnetic material and able to rotate about a determined pivot axis, and at least one magnetic bearing (105; 205) including a magnet (106; 206; 306; 406), which exerts a force of attraction on the arbor's pivot (103) made of magnetic material, and an endstone (63; 63A; 73; 83; 463) arranged between the magnet and the pivot, the endstone being formed of a material having a hardness greater than 500 HV and a friction coefficient less than or equal to 0.1 with the material of which the pivot is made; **characterized in that** the material forming the endstone has a high magnetic permeability; **in that** said endstone has, in cross-section to the pivot axis, smaller dimensions than those of the magnet; and **in that** the endstone is arranged in the timepiece movement to be centred on the determined pivot axis.

2. Timekeeping movement according to claim 1, **characterized in that** the magnetic bearing (105; 205) includes a pole structure (119; 219; 319) which includes the endstone (63; 73; 83) and a frame (61; 261; 361) arranged around the endstone, the endstone being maintained centred on the determined pivot axis by means of the frame fixed to a support of the timepiece movement.

3. Timekeeping movement according to claim 2, **characterized in that** the frame (61; 261; 361) and the endstone (63; 73; 83) are in one piece.

4. Timekeeping movement according to claim 3, **characterized in that** the frame (61) has the form of a thin plate which surrounds the endstone (63) and those thickness is less than one tenth of the thickness of the endstone, said plate being arranged against a surface of the magnet.

5. Timekeeping movement according to claim 2 or 3, **characterized in that** the pole structure (219) has the form of a socket with said endstone arranged at an end face of said socket, the magnet (206) being mounted inside said socket so that the endstone is abutting against a surface of the magnet.

6. Timekeeping movement according to claim 2 or 3, **characterized in that** the pole structure (319) includes an annular space, which separates the frame (361; 371; 381) from the endstone (63; 63; 73; 83), and at least three arms (365; 375; 385) which connect the frame to the endstone through the annular space.

7. Timekeeping movement according to claim 6, **characterized in that** the arms that connect the frame to the endstone are resilient.

8. Timekeeping movement according to claim 2, **characterized in that** the frame (61; 261; 361) is formed of a substantially non-magnetic material.

9. Timekeeping movement according to any of the preceding claims, **characterized in that** the endstone material which has a high magnetic permeability is formed of a mixture of hard metal and cobalt or nickel.

10. Timekeeping movement according to claim 9, **characterized in that** said selected hard metal is tungsten carbide (WC) and said binder is cobalt, the percentage of cobalt in said mixture being substantially between 20% and 25%.

11. Timekeeping movement according to any of claims 1 to 8, **characterized in that** the material with a high magnetic permeability forming the endstone is a magnetic metallic glass.
